# FASCICULE DE BREVET EUROPEEN

(11) **EP 0 876 039 B1**
(45) Date de publication et mention de la délivrance du brevet: **05.07.2006**
(21) Numéro de dépôt: 98201219.7
(22) Date de dépôt: 16.04.1998
(51) Int. Cl.: H04M 1/72

(54) **Système téléphonique sans fil**
Schnurloses Telefonsystem
Cordless telephone system

(30) Priorité: 30.04.1997 FR 9705381
(43) Date de publication de la demande: 04.11.1998
(73) Titulaire: Koninklijke Philips Electronics N.V., 5621 BA Eindhoven (NL)
(72) Inventeur: Roy, Nathalie, 75008 Paris (FR)
(74) Mandataire: Chaffraix, Jean

(56) Documents cités:
- EP-A- 0 542 118
- EP-A- 0 748 136
- US-A- 5 285 493

## Description

L'invention concerne un appareil téléphonique comportant une station de base connectée au réseau commuté, au moins un dispositif d'abonné comportant au moins un écran et au moins un organe de communication du genre répondeur notamment pour emmagasiner différents messages et présentant une pluralité d'états, rattaché à la station de base qui est pourvue d'un organe de gestion formé, entre autres, par un ensemble à processeur, par une mémoire contenant un programme d'exécution et par une mémoire vive.

L'invention concerne aussi un procédé mis en oeuvre dans un tel appareil et concerne également un dispositif d'abonné convenant à un tel appareil.

L'invention trouve des applications importantes dans les systèmes de télécommunication impliquant des protocoles, c'est notamment le cas des appareils téléphoniques répondant à la norme DECT, par exemple.

Les appareils téléphoniques de ce type comportant bien souvent une multitude de dispositifs d'abonné offrent de plus en plus de fonctions à l'usager. L'une d'entre elles est celle du répondeur qui permet de recevoir et d'émettre des messages pour ceux qui appellent et qui autorise la restitution de messages à l'usager à sa demande.

Un problème qui se pose avec ce genre d'appareil est pour l'usager, qui peut se trouver loin de la station de base, de savoir s'il a des messages. L'usager peut aussi éprouver le besoin de faire une annonce et donc est désireux de savoir si son répondeur est disponible. Ce problème est d'autant plus grave lorsqu'on affaire à des appareils satisfaisant aux normes DECT, qui peuvent donc comporter un grand nombre de dispositifs d'abonné.

Un tel appareil est connu du document EP-A 0 542 118. Pour avoir accès à l'état du répondeur l'utilisateur est obligé d'appuyer sur certaines touches pour déclencher l'émission d'un message du répondeur pour fournir l'indication de l'état dans lequel il est.

La présente invention propose un appareil du genre mentionné dans le préambule qui permet de connaître facilement l'état du répondeur inséré dans la station de base sans manoeuvre superflue.

Pour cela, un tel appareil est remarquable en ce qu'une information sur l'état de l'organe de communication est diffusée à tous les dispositifs d'abonné pour que les abonnés puissent en prendre connaissance sans intervention de leur part.

L'idée de l'invention consiste à utiliser la possibilité de diffuser à tous les dispositifs d'abonné des informations afin de faire connaître à ceux-ci facilement l'état de leur répondeur et éventuellement à communiquer avec celui-ci.

La description suivante faite en regard des dessins ci-annexés, le tout donné à titre d'exemple non limitatif, fera bien comprendre comment l'invention peut être réalisée.
La figure 1 montre un appareil conforme à l'invention.
La figure 2 montre un diagramme explicitant le fonctionnement de la station de base
La figure 3 montre un diagramme explicitant le fonctionnement d'un dispositif d'abonné.

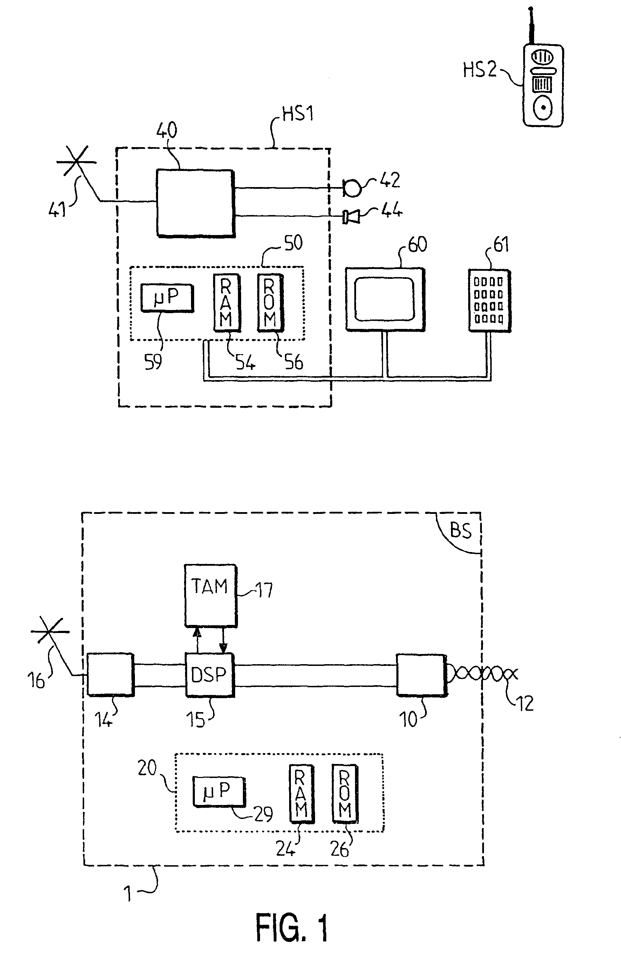

A la figure 1, l'appareil qui est représenté est un appareil répondant aux normes DECT. La référence 1 montre la station de base BS à laquelle peuvent être rattachés, par voie radioélectrique, une pluralité de dispositifs d'abonné HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2, ..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite les signaux vocaux notamment. Une mémoire de type flash 17 est utilisée pour remplir la fonction de répondeur. C'est-à-dire qu'elle contient les informations de parole provenant des abonnés lointains au travers de la ligne 12 et aussi des informations d'annonce qui sont le plus souvent destinées à ces abonnés lointains. Les informations de cette mémoire 17 sont traitées par le circuit 15 qui effectue les différentes conversions analogiques-numériques et réciproquement.

Tous les éléments de ce circuit de base 1 sont gérés par un ensemble à microprocesseur 20. Cet organe est composé, notamment, de la façon usuelle, d'une mémoire vive 24, d'une mémoire morte 26 contenant les instructions de fonctionnement de l'appareil et d'un processeur de gestion 29. Avec cet organe, il est possible de savoir quand la mémoire flash 17, qui est le constituant principal de la fonction répondeur, est disponible ou non et si un message y est enregistré ou non.

Le dispositif d'abonné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs d'abonné HS2, .... Cet ensemble traite les information en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur, non représenté sur la figure 1.

Selon l'invention, l'état du dispositif répondeur est montré sur l'écran 60 sans intervention de l'utilisateur. Ceci est obtenu, gràce à une caractéristique importante de l'invention, en faisant une diffusion de message. Pour cela, on utilise les prescriptions du paragraphe 7.2.4.3 de la norme ETS 300 175-3.

Le tableau I ci-dessous montre comment cette norme est utilisée.

**TABLEAU I**

| Information | mot binaire |
|---|---|
| Répondeur en service | M1 = 0111 0011 0000 0001 |
| Répondeur non en service | M1' = 0111 0011 0000 0000 |
| Messages enregistrés | M2 = 0111 0011 0000 0010 |
| Pas de messages | M2' = 0111 0011 0000 0011 |
| répondeur en ligne | M3 = 0111 0011 0000 0100 |
| répondeur non en ligne | M3' = 0111 0011 0000 0101 |

Ainsi, on trouve des couples de mots qui s'excluent mutuellement. M1 et M1' sont exclusifs l'un de l'autre ainsi que les couples M2,M2' et M3 et M3'. Ces mots sont disposés dans les emplacements repérés par a32 à a47 de ladite norme.

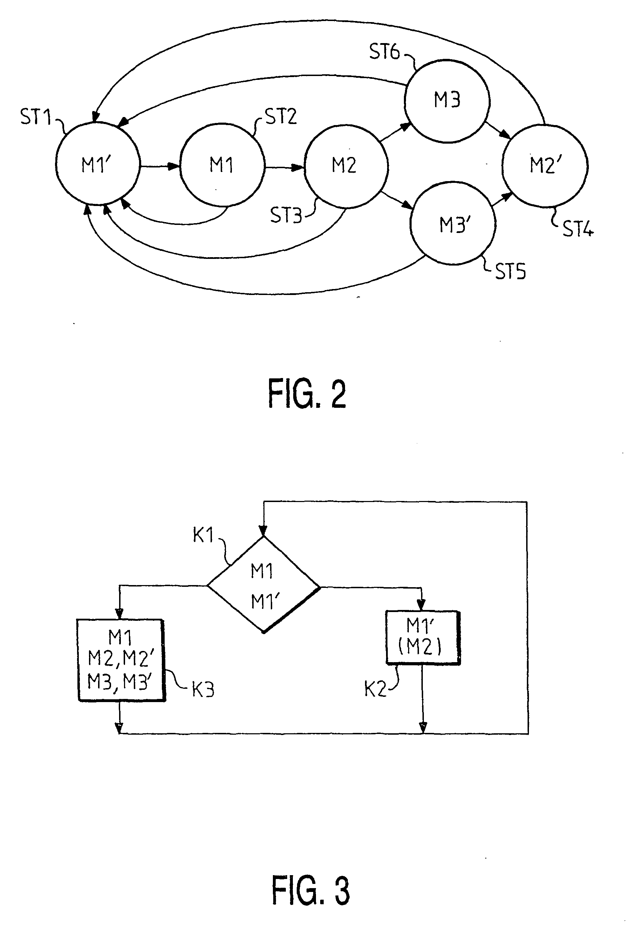

A la figure 2, on explicite les étapes de fonctionnement du circuit répondeur.

On considère l'état ST1 qui indique que le répondeur n'est pas en service, donc le mot M1' est émis en direction de tous les dispositifs d'abonné. Si le répondeur est mis en service, par exemple en validant cette mise en service qui apparaît sur un menu visible sur un écran de la station de base, alors on passe à l'état ST2, le mot M1 est donc émis. Puis, le répondeur peut se mettre en ligne, état ST3 correspondant à l'émission du mot M2, pour effectuer une tâche telle que : enregistrer un message qui provient de la ligne téléphonique 12, diffuser une annonce sur cette ligne téléphonique 12, ou, encore, restituer un message à un utilisateur sur un des dispositifs d'abonné. Sa tâche effectuée, le répondeur passe à l'état ST4 correspondant à l'émission du motM2' en passant soit par l'état ST5 qui indique qu'aucun message n'a été enregistré lors de la mise en ligne, soit en passant par l'état ST6 qui indique qu'un message a été enregistré. Les états ST5 et ST6 impliquent l'émission des mots M3' et M3 respectivement. Il est évident que depuis chacun de ces états on peut revenir à l'état ST1 en desactivant la fonction répondeur.

Depuis un dispositif d'abonné, on peut, en validant certains items d'un menu, consulter l'état de ce circuit répondeur. Ceci est schématisé à la figure 3.

Si le mot M1' a été émis, ce qui est détecté à la case Kl, donc signalant que le répondeur n'est pas en service, seule cette information bil' est visible à l'utilisateur. Il lui est ainsi montré que le répondeur n'est pas en service (case K2). Si le mot M1 a été transmis alors les informations concernant les mots M1, M2 ou M2', M3 ou M3' sont visibles (case K3).

Ces différents mots sont émis périodiquement de telle sorte que si un dispositif d'abonné n'est plus dans la couverture de la station de base, les informations d'états concernant le répondeur seront actualisées dès qu'il sera de retour dans ladite couverture.

Il est à noter cependant que les mots M1' et M2 ne sont pas exclusifs. En effet, il se peut que l'utilisateur ait :
- mis son répondeur en service, émission du mot M1,
- reçu des messages, émission du mot M2,
- mis son répondeur hors service, sans lire les messages, émission du mot M1'.

Dans ce cas, les mots M2 et M1' seront émis au moment du changement d'état puis ensuite périodiquement. Et les informations correspondants aux mots M2 et M1' devront être visibles.

## Revendications

1. Appareil téléphonique comportant une station de base (1) connectée au réseau commuté (12), au moins un dispositif d'abonné (HS1, HS2) comportant au moins un écran (60) et au moins un organe de communication (17) du genre répondeur notamment pour emmagasiner différents messages et présentant une pluralité d'états (ST1, ST2, ST3,ST4, ST5,ST6), rattaché à la station de base qui (1) est pourvue d'un organe de gestion (50) formé, entre autres par un ensemble à processeur, (59) par une mémoire (56) contenant un programme d'exécution et par une mémoire vive (54), **caractérisé en ce que** la station de base est adaptée à diffuser, sans intervention de la part des abonnés, une information sur l'état de l'organe de communication (M1, M1', M2, M2', M3 M3') à tous les dispositifs d'abonné pour que les abonnés puissent en prendre connaissance.

2. Appareil téléphonique selon la revendication 1, comportant un organe de communication du genre répondeur présentant les états suivants:
- répondeur en service
- répondeur non en service
- messages enregistrés
- pas de messages
- répondeur en ligne
- répondeur non en ligne
**caractérisé en ce que** l'état de l'organe de communication est transmis à au moins un dispositif d'abonné.

3. Appareil téléphonique selon la revendication 1 ou 2, **caractérisé en ce que** l'information d'état est visualisée sur l'écran (60) du dispositif d'abonné (HS 1).

4. Procédé mis en oeuvre dans un appareil téléphonique comportant une station de base (1) connectée au réseau commuté, au moins un dispositif d'abonné (HS1) comportant au moins un écran (60) et au moins un organe de communication (17) du genre répondeur notamment pour emmagasiner différents messages, rattaché à la station de base qui est pourvue d'un organe de gestion (20) formé, entre autres par un ensemble à processeur (29), par une mémoire (26) contenant un programme d'exécution et par une mémoire vive (24) où le procedé comporte au moins une étape de diffusion vers tous les dispositifs d'abonné pour des messages concernant l'état de l'organe de communication parmi une pluralité que ce dernier peut prendre **caractérisé en ce que** la diffusion est effectuée sans intervention de la part des abonnés.

5. Procédé selon la revendication 4, applicable à un organe de communication du genre répondeur présentant les états suivants :
- répondeur en service
- répondeur non en service
- messages enregistrés
- pas de messages
- répondeur en ligne
- répondeur non en ligne
**caractérisé en ce que** l'étape de diffusion comporte une sous-étape de visualisation pour que l'information d'état soit visualisée sur l'écran.

## Claims

1. A telephony device comprising a base station (1) connected to the switched network (12), at least a subscriber unit (HS1, HS2) comprising at least a screen (60) and at least a communication element (17) of the responder type, notably for storing various messages and having a plurality of states (ST1, ST2, ST3, ST4, ST5, ST6), connected to the base station (1) which includes a management element (50) formed, inter alia, by a processor assembly (59), by a memory (56) containing an execution program and by a random-access memory (54), **characterized in that** the base station is adapted to broadcast, without intervention on the part of the subscribers, data about the state of the communication element (M1, M1', M2, M2', M3, M3') to all the subscriber units, so that the subscribers can take cognizance of it.

2. A telephony device as claimed in claim 1, comprising a communication element of the responder type having the following states:
- responder in service
- responder not in service
- registered messages
- no messages
- aligned responder
- non-aligned responder
**characterized in that** the state of the communication element is transmitted to at least one subscriber unit.

3. A telephony device as claimed in claim 1 or 2, **characterized in that** the state data is displayed on the screen (60) of the subscriber unit (HS1).

4. A method implemented in a telephony device comprising a base station (1) connected to the switched network, at least a subscriber unit (HS1) comprising at least a screen (60) and at least a communication element (17) of the responder type, notably for storing various messages, connected to the base station which includes a management element (20) formed, inter alia, by a processor assembly (29), by a memory (26) containing an execution program and by a random-access memory (24), wherein the method comprises at least a broadcasting step broadcasting to all the subscriber devices messages relating to the state of the communication element of the plurality of states the latter can adopt, **characterized in that** the broadcasting is effected without the intervention on the part of the subscribers.

5. A method as claimed in claim 4, applicable to a communication element of the responder type, the communication element having the following states:
- responder in service
- responder not in service
- registered messages
- no messages
- aligned responder
- non-aligned responder
**characterized in that** the broadcasting step comprises a display step for the state data to be displayed on the screen.

## Patentansprüche

1. Telefongerät mit einer Basisstation (1) mit einer Netzwerkverbindung (12), mindestens einem Endgerät (HS1, HS2) mit mindestens einem Bildschirm (60) und mindestens einem Kommunikationselement (17) der Art eines Anrufbeantworters, insbesondere für die Aufzeichnung verschiedener Nachrichten und mit einer Vielzahl von Zuständen (ST1, ST2, ST3, ST4, ST5, ST6) in Bezug auf die Basisstation (1), die mit einem Verwaltungselement ausgestattet ist (50), gebildet u.a. aus einer Prozessoreinheit, (59) aus einem Speicher (56), der ein Ausführungsprogramm enthält, und aus einem Schreib-Lese-Speicher (54), **dadurch gekennzeichnet, dass** die Basisstation eigenständig und ohne den Eingriff des Teilnehmers eine Information zum Zustand des Kommunikationselements (M1, M1', M2, M2', M3, M3') an alle Endgeräte übersendet, damit die Teilnehmer diese zur Kenntnis nehmen können.

2. Telefongerät nach Anspruch 1 mit eine Kommunikationselement der Art eines Anrufbeantworters, der in folgende Zustände übergehen kann:
- Anrufbeantworter in Betrieb
- Anrufbeantworter nicht in Betrieb
- Nachrichten aufgezeichnet
- keine Nachrichten
- Anrufbeantworter online
- Anrufbeantworter nicht online
**dadurch gekennzeichnet, dass** der Zustand des Kommunikationselements an mindestens ein Endgerät übersendet wird.

3. Telefongerät nach Anspruch 1 oder 2, **dadurch gekennzeichnet, dass** die Zustandsinformation auf dem Bildschirm (60) der Teilnehmervorrichtung (HS1) angezeigt wird.

4. Verfahren, umgesetzt in einem Telefongerät mit einer Basisstation (1) mit einer Netzwerkverbindung, mindestens einem Endgerät (HS1) mit mindestens einem Bildschirm (60) und mindestens einem Kommunikationselement (17) der Art eines Anrufbeantworters, insbesondere für die Aufzeichnung verschiedener Nachrichten in Bezug auf die Basisstation, die mit einem Verwaltungselement ausgestattet ist (20), gebildet u.a. aus einer Prozessoreinheit (29), aus einem Speicher (26) mit einem Ausführungsprogramm und aus einem Schreib-Lese-Speicher (24), wobei das Verfahren mindestens einen Schritt zur Übersendung von Nachrichten in Bezug auf den Zustand, von dem es in mehrere übergehen kann, des Kommunikationselements an alle Endgeräte enthält, **dadurch gekennzeichnet, dass** die Übersendung ohne Eingriff des Teilnehmers ausgeführt wird.

5. Verfahren nach Anspruch 4, anwendbar auf ein Kommunikationselement der Art eines Anrufbeantworters, der in folgende Zustände übergehen kann:
- Anrufbeantworter in Betrieb
- Anrufbeantworter nicht in Betrieb
- Nachrichten aufgezeichnet
- keine Nachrichten
- Anrufbeantworter online
- Anrufbeantworter nicht online
**dadurch gekennzeichnet, dass** der Schritt zur Übersendung einen Unterschritt zur Anzeige der Zustandsinformation enthält, damit diese auf dem Bildschirm angezeigt wird.
